# EUROPÄISCHE PATENTSCHRIFT

(11) **EP 0 655 384 B1**
(45) Veröffentlichungstag und Bekanntmachung des Hinweises auf die Patenterteilung: **23.07.1997**
(21) Anmeldenummer: 94118233.9
(22) Anmeldetag: 18.11.1994
(51) Int. Cl.: B62H 3/12

(54) **Vorrichtung zur Halterung von Fahrrädern**
Device for holding bicycles
Dispositif de maintien de bicyclettes

(30) Priorität: 25.11.1993 DE 4340215
(43) Veröffentlichungstag der Anmeldung: 31.05.1995
(73) Patentinhaber: SYMCON-MONTREUX S.A., 1820 Montreux (CH)
(72) Erfinder:

(56) Entgegenhaltungen:
- DE-A- 4 209 007
- DE-U- 9 313 401
- FR-A- 2 546 123
- US-A- 3 770 133

## Beschreibung

Die Erfindung betrifft eine Vorrichtung zur Halterung von Fahrrädern in vertikaler Stellung, mit jeweils einem längs einer im wesentlichen vertikalen Führung verschieblichen Halterungsorgan für je ein Fahrrad.

In vertikaler bzw. steil geneigter Stellung kann ein Fahrrad auf kleinerer Grundfläche abgestellt bzw. aufbewahrt werden, so daß das Fahrrad bzw. mehrere Fahrräder in einem viel kleineren Fahrradkeller bzw. einer Fahrradgarage untergebracht werden kann bzw. können.

Gemäß der auf eine ortsfest an einem Fahrradständer zu installierende Diebstahlsicherung gerichteten Offenlegungsschrift DE 4014158A1 umfaßt der Fahrradständer eine sog., im einzelnen nicht gezeigte, Hebeklemme, welche über einen Hebemechanismus entlang einer vertikalen Stütze des Fahrradständers bewegbar ist.

Der Hebemechanismus umfaßt eine innerhalb der Stütze angeordnete Gewindespindel, die über einen an der Oberseite der Stütze angeordneten Elektromotor angetrieben wird. Gemäß Figuren 1 und 5 dieser Druckschrift greift dabei die Hebeklemme allein an dem vorstehenden Teil des Vorderrades des Fahrrades an.
Hierbei ist nachteilig, daß das Vorderrad immer erst umständlich an der Hebeklemme festgemacht werden muß. Dazu muß das Vorderrad genau gegenüber der Hebeklemme positioniert werden. Erst nach dieser genauen Positionierung des Vorderrades gegenüber der Hebeklemme soll das Vorderrad gegenüber der Hebeklemme durch einen (in der Druckschrift nicht dargestellten) Sicherungsbolzen gesichert werden, welcher über einen mechanischen oder elektrischen Kontakt an der Hebeklemme durch Einfahren des Vorderrades des Fahrrades ausgelöst wird.
Somit muß das gesamte Fahrrad beim Positionieren und Festmachen oder Sichern gegenüber der Hebeklemme immer erst vollständig zum Stillstand kommen. Erst danach, in einem zweiten Arbeitstakt, fährt die Hebeklemme entlang der Stütze nach oben, wobei also das Vorderrad von der Hebeklemme nach oben mitgenommen und demzufolge das Hinterrad zunächst auf dem Fahrboden abrollt, bis es ebenfalls in die vertikale Bewegungsbahn gelangt.
Das Fahrrad muß also zuerst abgebremst und dann wieder beschleunigt werden. Dieses Beschleunigen bzw. Hochheben des Fahrrades aus dem Stillstand heraus erfordert eine relativ große Kraft, die praktisch nur durch einen Antriebsmotor aufgebracht werden kann. Dies ist umständlich, teuer und störanfällig.

Aus der deutschen Patentschrift 41 19 403 ist ebenfalls eine Vorrichtung gemäß dem eingangs genannten Oberbegriff bekanntgeworden, bei welcher die vertikale Führung von einer Haltestange gebildet ist. Das längs dieser vertikalen Haltestange verschiebliche Halterungsorgan ist doppelseitig aus Röhren gefertigt, deren waagrechtes Teil das Vorderrad des Fahrrades aufnimmt, deren gewölbtes Teil die zur senkrechten Halterung des Vorderrades notwendigen Anlagepunkte schafft und deren senkrechter Teil in Verbindung mit dem waagrechten und gewölbten Teil die senkrechte Führung und das Schwenken über zwei obere Laufrollen und eine untere Laufrolle ermöglicht.
Dieses Halterungsorgan erfaßt demnach das Vorderrad auf einem größeren Teil seines vorstehenden Umfanges als die relativ kleine Hebeklemme bei der deutschen Patentschrift 40 14 158. Das Positionieren des Vorderrades an dem Halterungsorgan ist demnach einfacher, jedoch trotzdem umständlich und unbequem. Insbesondere muß das Vorderrad zuerst in die Halterungsvorrichtung gestellt, in dieser Vorrichtung verriegelt und anschließend nach oben bewegt und in der Endstellung arretiert werden.
Zum Einstellen und Verriegeln des Vorderrades in dem Halterungsorgan muß also auch hierbei das gesamte Fahrrad zum Stillstand kommen und kann erst anschließend nach oben bewegt werden. Die hierzu erforderliche Kraft soll dabei durch ein Zugseil aufgebracht werden, welches über eine Umlenkrolle an dem Halterungsorgan angreift. Dank der Umlenkrolle ist zwar die erforderliche Zugkraft an dem Zugseil halbiert, dafür ist aber der Weg verdoppelt. Bei einer Betätigung nur von Hand muß der Benutzer also mehrfach an dem Zugseil nachfassen, was sehr umständlich ist. Praktisch wird daher das Fahrrad nur in eine Schräglage gebracht werden können, nicht aber in die vertikale Steillage. Die somit erreichbare Raumersparnis ist im Vergleich mit dem erforderlichen Aufwand und der Umständlichkeit der Betätigung zu gering.

Demgegenüber liegt der Erfindung die Aufgabe zugrunde, eine einfache und preisgünstig herstellbare Vorrichtung der eingangs genannten Art zu schaffen, mittels welcher Fahrräder auf geringer Grundfläche, mit geringem Kraftaufwand sicher abgestellt bzw. aufbewahrt werden können; insbesondere soll dabei die Positionierung bzw. das Anbringen des Vorderrades an dem Halterungsorgan vereinfacht und erleichtert werden, derart, daß das gesamte Fahrrad nicht erst zum Stillstand kommen muß, sondern das Einschieben bzw. Anbringen des Vorderrades an dem Halterungsorgan soll in einem Bewegungszuge mit der Überführung des gesamten Fahrrades längs der vertikalen Führung in die Staustellung erfolgen; somit soll es möglich werden, daß der Schwung des Fahrrades, also seine kinetische Energie beim Einfahren in das Halterungsorgan ausgenutzt wird bzw. umgesetzt wird in den Energieaufwand, der zum Hochfahren bzw. Hochheben des Fahrrades in die Staustellung erforderlich ist.

Die Lösung dieser Aufgabe besteht gemäß der Erfindung darin, daß die vertikale Führung für das verschiebliche Halterungsorgan aus einer paarweisen Anordnung von Stäben, Rohren oder Seilen besteht, deren Abstand voneinander mit zunehmender Höhe abnimmt, und die mit dem verschieblichen Halterungsorgan so zusammenwirken, daß die Klemmkraft des Halterungsorgans auf das Vorderrad mit zunehmender Höhe zunimmt.

Vorzugsweise ist das Halterungsorgan im wesentlichen von zwei Greifbacken gebildet, die an ihren vorderen Ende mittels einer zu der Führung parallen Scharnierachse miteinander verbunden und mit ihrem hinteren Ende längs je einem der Führungsorgane geführt sind, wobei die Führung nach unten begrenzt ist auf eine Höhe entsprechend dem Radius des Vorderrades des Fahrrades.
Das Fahrrad kann somit zunächst zwischen die geöffneten Greifbacken eingefahren werden. Das Vorderrad braucht dabei nicht zum Stillstand zu kommen, sondern die horizontale Einfahr-Bewegung geht in einem Zuge in die schräge bzw. vertikale Bewegung über. Bei Beginn des Übergangs von der horizontalen in die vertikale Verschiebung ist der Griff des Greiforgans an dem Fahrrad zwar noch relativ lose; zu Beginn genügt aber dieser noch lose Griff, da zu Anfang noch kein bzw. erst wenig Gewicht auf das Greiforgan wirkt. Im Zuge der Aufwärtsbewegung werden die Greifbacken von den gegeneinander geneigten Führungsorganen aufeinander zuverschwenkt und somit das Vorderrad fester umgriffen, in gleichem Maße wie auch das Gewicht, also die erforderliche Hubkraft, zunimmt.
Somit kann das Fahrrad allein mit der Körperkraft des Benutzers in die Staustellung gebracht werden; man kann aber auch einen motorischen Antrieb vorsehen.

Im einzelnen können die Führung und das Halterungsorgan sehr unterschiedlich ausgebildet sein, entsprechend den jeweiligen Verhältnissen und Anforderungen. Einige besondere Ausgestaltungen sind in den Unteransprüchen gegeben.

Zur näheren Erläuterung werden nachfolgend Ausführungsbeispiele anhand der Zeichnung beschrieben.

Figuren 1-4 zeigen ein erstes Ausführungsbeispiel, nämlich:
- Fig. 1: eine Ansicht in Richtung des Pfeiles I in Fig. 2, d. h. in Fahrtrichtung eines Fahrrades,
- Fig. 2: eine Seitenansicht, in Richtung des Pfeiles II in Fig. 1,
- Fig. 3: zeigt vergrößert den Schnitt nach Linie III-III in Fig. 1 bzw. in Fig. 2 (Offenstellung), mit Vorderrad, schematisch,
- Fig. 4: zeigt den Schnitt nach Linie IV-IV in Fig. 1 bzw. 2 (Staustellung);
- Fig. 5,5a: zeigen eine Abwandlung der Greifbacken, für verschieden dicke Reifen.

Figuren 6-8 zeigen ein anderes Ausführungsbeispiel, nämlich

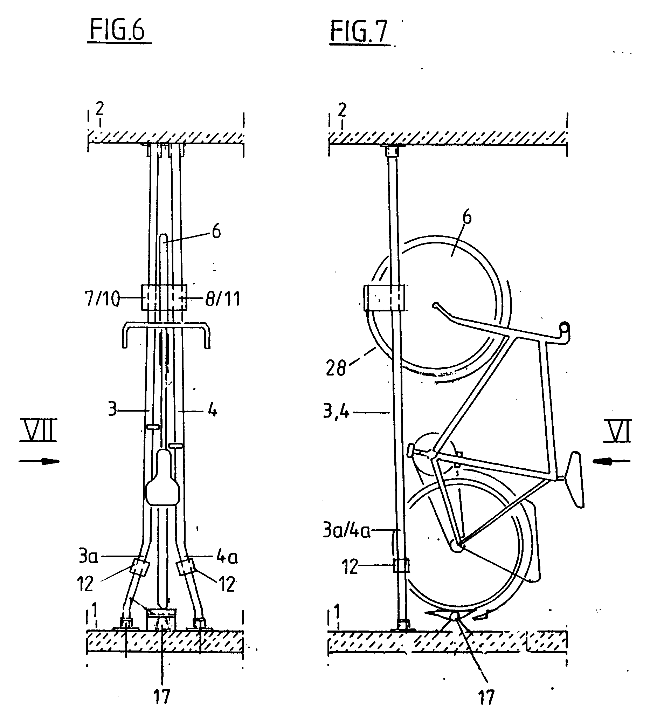

- Fig. 6: eine Ansicht in Richtung des Pfeiles VI-VI in Fig. 7 (in Fahrtrichtung des eingeparkten Fahrrads);
- Fig. 7: ist die Seitenansicht in Richtung des Pfeiles VII in Fig. 6;

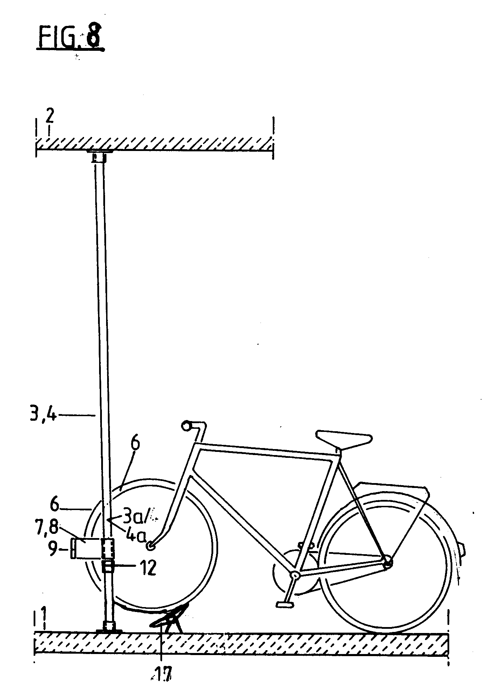

- Fig. 8: entspricht der Fig. 7, jedoch in der Ausgangsstellung;
Zwischen dem Fußboden 1 und der Decke 2 eines Raumes (oder eines separaten Park-Gestells) sind zwei Führungsorgane 3,4 festgemacht. Die Führungsorgane 3,4 können Rohre oder Profilschienen sein; bei einer besonders einfachen Ausführungsform sind als Führungsorgane Seile zwischen dem Fußboden und der Decke gespannt. Die Führungsorgane 3,4 sind gegeneinander geneigt, d.h. nach oben zu wird der Abstand zwischen ihnen - in Richtung des einparkenden Fahrrades gesehen - kleiner.

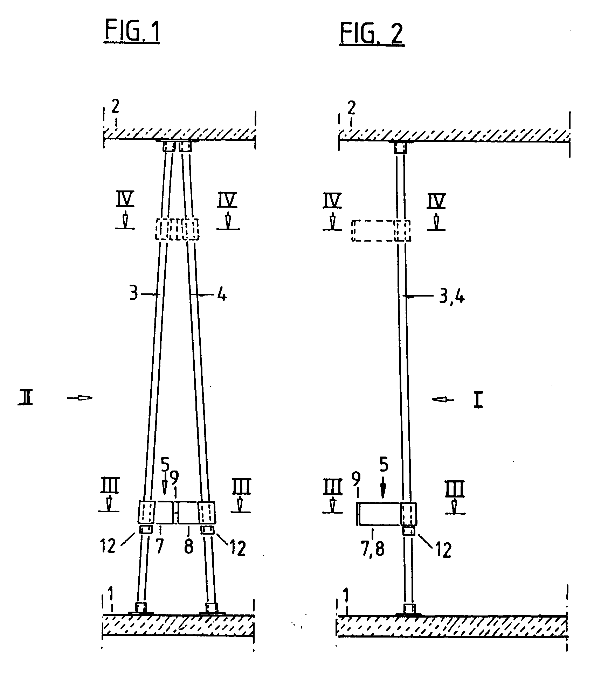

Längs den Führungsorganen 3,4 ist ein Halterungsorgan bzw. ein Greifer 5 verschieblich, welches(r) an dem in Fahrtrichtung vorderen Teil des Vorderrades 6 des Fahrrades angreift und bei der Verschiebung längs der Führungsorgane 3,4 das Fahrrad in die vertikale Staustellung überführt. Das Halterungsorgan besteht im wesentlichen aus zwei Greif- bzw. Klemmbacken 7,8, die an ihrem einen Ende mittels eines zu der Führung im wesentlichen parallelen Gelenks 9 miteinander verbunden sind, während ihre vorderen Enden längs der Führungsorgane geführt sind. Gemäß Figuren 3 und 4 tragen die Klemmbacken an ihren von dem Gelenk 9 abgelegenen Ende je ein Rohrstück bzw. eine Führungs-Hülse 10, 11, durch die hindurch sich je eines der Führungsorgane 3,4 erstreckt, dazwischen sind Wälzkörper vorgesehen.
Nach unten ist der Verschiebungsweg der Greifbacken 7,8 durch auf den Führungsorganen 3,4 festgemachte Anschläge 12 ungefähr in Höhe der Vorderradachse begrenzt. Die Innenseiten der Greifbacken sind angepaßt an den Querschnitt des Reifens und der Felge des Fahrrades.

Der Abstand der Führungsorgane 3,4 voneinander ist so bemessen, daß das Vorderrad 6 in der Ausgangsstellung gemäß Figuren 1 und 2 bequem zwischen die geöffneten Greifbacken 7,8 einschiebbar ist.

Bei der nun folgenden Verschiebung des Greifers 5 längs den Führungen 3,4 nach oben werden die Greifbacken 7,8 - aufgrund des kleiner werdenden Abstandes zwischen den Führungen - aufeinander zu geschwenkt, die Greifbacken schließen also das Vorderrad 6, d. h. den von ihnen umgriffenen Bereich des Reifens und der Feige fest zwischeneinander ein.

Zweckmäßig sind die Greifbacken mit elastischem Material versehen bzw. ausgepolstert, wie in Fig. 3 und 4 mit 13,14 angedeutet. Zweckmäßig sind die Greifbacken insgesamt derart elastisch, daß sie das Vorderrad mit federndem Andruck umschließen.

Wie ersichtlich, wird das Vorderrad erst während der Verschiebung nach oben fester umgriffen, zu Beginn der Verschiebung ist der Griff dagegen noch relativ lose; zu Beginn genügt aber dieser noch lose Griff, da zu Anfang noch kein bzw. erst wenig Gewicht auf die Greifbacken wirkt.

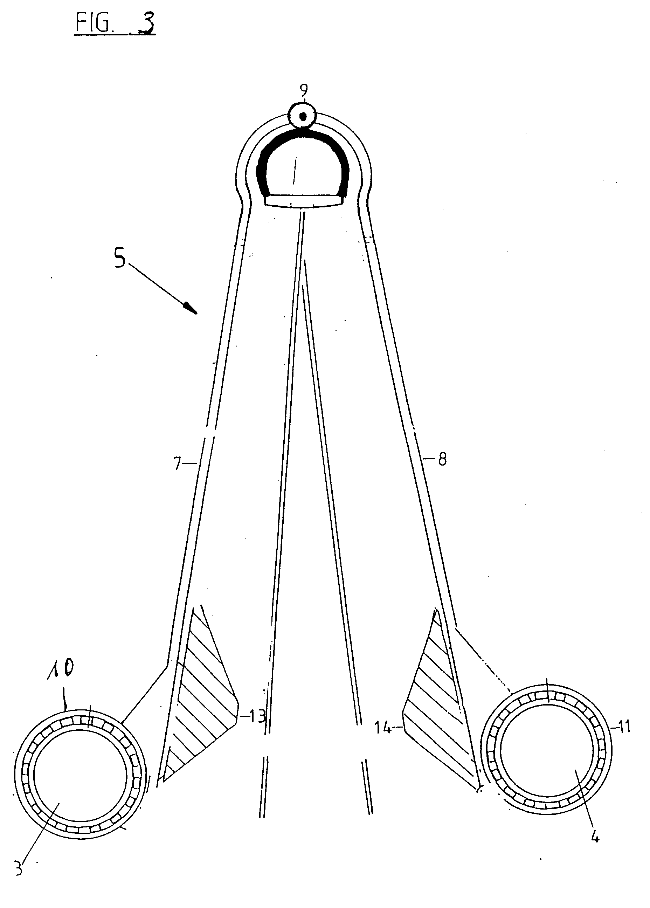

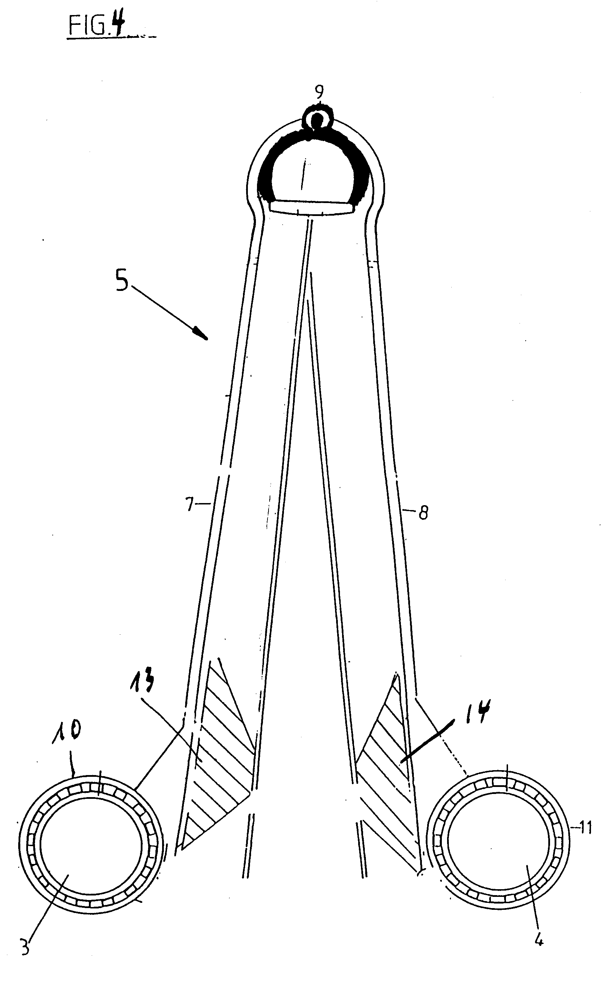

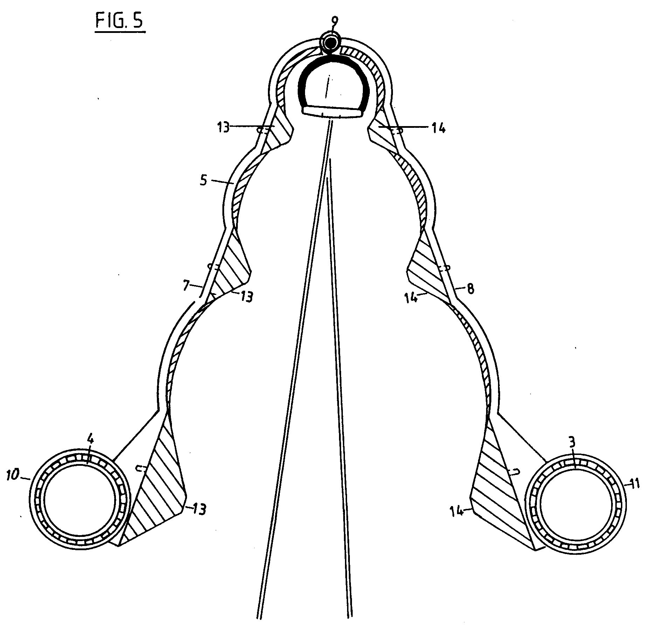

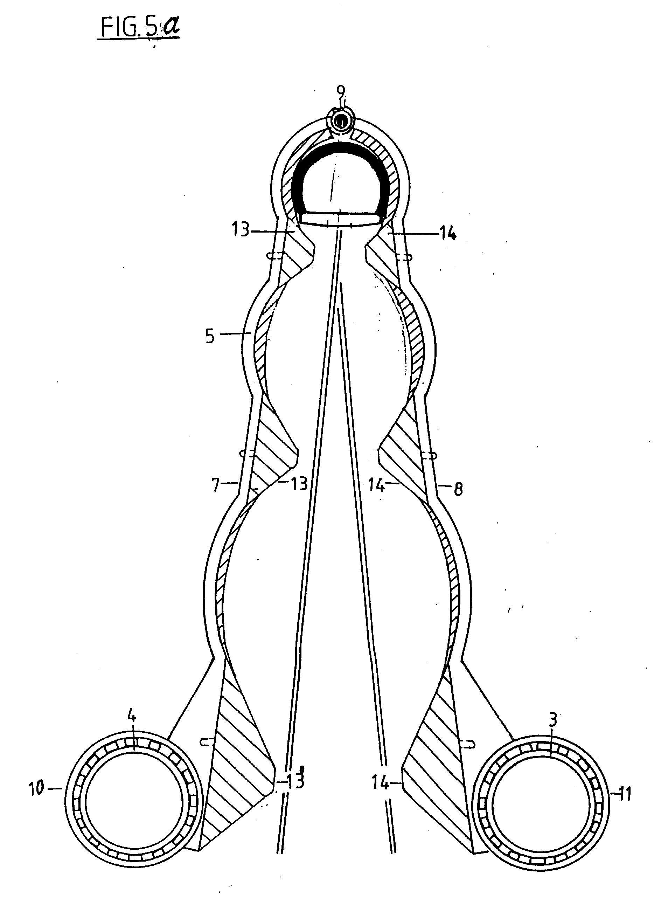

Gemäß Figur 5 sind an den beiden Greifbacken 7, 8 drei unterschiedliche Aufnahmen für drei verschieden dicke Fahrradreifen vorgesehen, nämlich vorne, an der Scharnierachse 9 für einen relativ dünnen, sodann für einen dicken und schließlich für einen noch dickeren Fahrradreifen.
Diese verschiedenen Aufnahmen sind durch entsprechende Auswölbungen der Greifbacken 7, 8 einerseits und an ihren Innenseiten angebrachte Profilierungen oder Vorsprünge 13, 14 aus elastischem Material gebildet.

Bei der Ausführung nach Figuren 6, 7 und 8 sind die beiden Führungsorgane 3,4 in ihrem unteren Bereich 3a,4a, insbesondere in der Höhe der Achse des Vorderrades, stärker gegeneinander und/oder in Fahrtrichtung geneigt, während weiter oben der Abstand zwischen den Führungsorganen 3,4 nur noch geringfügig abnimmt. Hierdurch wird das Vorderrad gleich zu Anfang fester umgriffen. Diese Ausführungsform ist besonders geeignet, wenn die Greifbacken 7,8 durch ein besonderes Antriebsorgan verschoben werden, wenn also die Greifbacken nicht durch das Vorderrad 6 nach oben geschoben werden, sondern wenn umgekehrt die Greifbacken 7,8 das Vorderrad 6 und damit das Fahrrad insgesamt nach oben ziehen.

Zur Führung der Räder, insbesondere des Hinterrades, ist vor und zwischen den Führungsorgangen 3, 4 eine besondere Auffahrwippe 17 vorgesehen.

### Bezugszeichenliste

- 1: Fußboden
- 2: Decke
- 3,4: Führungsorgane/Führungsrohre
- 3a, 4a: unterer Bereich
- 5: Greifer
- 6: Vorderrad-Reifen
- 7,8: Greifbacken
- 9: Gelenk/Scharnier
- 10,11: Führungshülsen
- 12: Anschläge
- 13,14: Vorsprünge/Polsterung
- 17: Wippe

## Patentansprüche

1. Vorrichtung zur Halterung von Fahrrädern in vertikaler Stellung, mit jeweils einem längs einer im wesentlichen vertikalen Führung verschieblichen Halterungsorgan für je ein Fahrrad,
dadurch gekennzeichent,
daß die vertikale Führung für das verschiebliche Halterungsorgan aus einer paarweisen Anordnung von Stäben, Rohren oder Seilen besteht, deren Abstand voneinander mit zunehmender Höhe abnimmt und die mit dem verschieblichen Halterungsorgan So zusammenwirken, daß die Klemmkraft des Halterungsorgans auf das Vorderrad mit zunehmender Höhe zunimmt.

2. Vorrichtung nach Anspruch 1,
dadurch gekennzeichnet,
daß das Halterungsorgan im wesentlichen von zwei Greifbacken (7,8) gebildet ist,
die an ihrem vorderen Ende mittels einer zu der Führung parallelen Scharnierachse (9) miteinander verbunden und an ihrem hinteren Ende längs je einem der Führungsorgane (3,4) geführt sind.

3. Vorrichtung nach Anspruch 2,
dadurch gekennzeichnet,
daß die Greifbacken (7,8) an ihren Innenseiten ein Profil entsprechend dem zu umgreifenden Reifen und der Felge des Vorderrades (6) haben.

4. Vorrichtung nach Anspruch 2,
dadurch gekennzeichnet,
daß die Greifbacken (7,8) der Negativ-Form des zwischen ihnen festklemmbaren Teiles des Vorderrades entsprechen.

5. Vorrichtung nach einem der Ansprüche 2-4,
dadurch gekennzeichnet,
daß zwischen den vorzugsweise elastisch biegbaren Greifbacken (7,8) hintereinander zwei oder drei Aufnahmen (a,b,c) für verschieden dicke Reifen vorgesehen sind.

6. Vorrichtung nach einem der Ansprüche 1-5,
dadurch gekennzeichnet,
daß die Führungsorgane (3,4) in Fahrtrichtung des Fahrrades und/oder quer dazu geneigt bzw. gebogen sind.

7. Vorrichtung nach Anspruch 6,
dadurch gekennzeichnet,
daß die Führungsorgane (3,4) in ihrem unteren Bereich (3a, 4a), insbesondere in der Höhe der Achse des Vorderrades, stärker gegeneinander und/oder in Fahrtrichtung geneigt sind als im oberen Bereich.

8. Vorrichtung nach einem der Ansprüche 1-7,
dadurch gekennzeichnet,
daß zwischen den Führungsorganen (3,4) eine in Fahrtrichtung ansteigende Anlaufschräge bzw. Anlauffläche bzw. eine Hubschwelle vorgesehen ist, deren Höhe und Länge bzw. Steigung derart bemessen und gegenüber den Führungen ausgerichtet sind, daß der hintere/untere Teil des Schutzbleches des Hinterrades auch in der letzten Phase des Hochfahrens vom Fußboden abgehoben ist bzw. Freiraum gegenüber seiner Umgebung hat.

9. Vorrichtung nach Anspruch 8,
dadurch gekennzeichnet,
daß die Anlaufschräge und eine an diese anschließende Ablaufschräge von einer oberhalb des Fußbodens um eine horizontale Achse schwenkbaren Wippe (17) gebildet sind.

## Claims

1. Appliance to hold bicycles in vertical position by the help of a holding-organism sliding along an almost verticl frame for each bicycle,
characterized in a way,
that the vertical conducting (frame) for the sliding holding-organism is developed of parallel running bars, tubes or ropes in pairs, which reduce their inbetween distance the higher they come and which operate together with the sliding holding organism in that way that the pressing energie of the holding organism increases towards the front wheel while advancing higher.

2. Appliance according to claim 1,
characterized in a way,
that the holding organism essentially is shaped of two grab-cheeks (7,8) which are joined together at their front end by an hinge axe (9) running parallel to the frame and that at their behind end are carried along each on one of the parallel running bars (3, 4).

3. Appliance according to claim 2,
characterized in a way,
that the grab cheeks (7, 8) are furnished with a profile inside that conforms to the held front wheel (6) and its felloe.

4. Aplliance according to claim 2,
characterized in a way,
that the grab cheeks (7, 8) conform to negative shape of the held front wheel's parts.

5. Appliance according to claims 2-4,
characterized in a way,
that between the prefered flexible and bendable grab cheeks (7,8) two or three holdings are provided, one behind the other (a, b, c) to hold different wheel measures.

6. Appliance according to claims 1-5
characterized in a way,
that the parallel running bars (3, 4) are bent in the bicycle's driving forward position and/or across towards it are bent as well.

7. Appliance according to claim 6,
characterized in a way,
that the running bars (3, 4) are more bent together especially in the height of the front-wheel's axel in lower postion (3a, 4a) and/or in driving forward position than in the upper area.

8. Appliance according to claims 1-7,
characterized in a way,
that between the running bars (3, 4) there is installed in driving forward position an inclined rising running-on surface or else a lifting barrier whose height, length and rise are apportioned and adjusted towards the running bars in a way that the lower part of the behind wheel's mud-guard is lifted from the floor during the last phase of running up and keeps the mud-guard in distance to its environment.

9. Aplliance conforming to claim 8,
characterized in a way,
that the running-on inclined rise and its following run-down inclination are built as a balance situated above the floor and swinging around its horizontal axel.

## Revendications

1. Dispositif pour l'appui de bicyclettes en position verticale, avec respectivement un organe de support par bicyclette, coulissant dans une guidage essentiellement vertical,
caractérisé en ce que:
le guidage vertical de l'organe de support mobile consiste en une disposition appariée de poutres, tubes ou câbles, dont l'écart l'un par rapport à l'autre diminue avec l'accroissement de la hauteur et qui agissent avec l'organe de support mobile de sorte que la force de coincement de l'organe de support sur la roue avant augmente avec la hauteur.

2. Dispositif selon la revendication 1,
caractérisé en ce que:
l'organe de guidage est essentiellement composé par deux joues de saisie (7,8), liées entre elles à leur extrémité antérieure au moyen d'une charnière (9) parallèle au guidage, chacune étant guidée longitudinalement à son extrémité postérieure par un des organes de guidage (3,4).

3. Dispositif selon la revendication 2,
caractérisé en ce que:
les joues de saisie (7,8) sont dotées sur leur face intérieure d'un profil correspondant au pneu à enserrer et à la jante de la roue avant (6).

4. Dispositif selon la revendication 2,
caractérisé en ce que:
les joues de saisie (7,8) correspondent à la forme en négatif de la partie de la roue avant blocable entre les joues.

5. Dispositif selon une des revendications 2-4,
caractérisé en ce que:
deux ou trois prises (a,b,c) pour des pneus d'épaisseur différentes sont prévues l'une derrière l'autre entre les joues de saisie qui peuvent fléchir avantageusement de manière élastique.

6. Dispositif selon une des revendications 1-5,
caractérisé en ce que:
les organes de guidage (3,4) sont inclinés resp. courbés selon la direction de marche de la bicyclette et/ou transversalement à celle-ci.

7. Dispositif selon la revendication 6,
caractérisé en ce que:
les organes de guidage (3,4) sont plus fortement inclinés contre et/ou selon la direction de marche dans leur zone inférieure (3a,4a), particulièrement à la hauteur de l'axe de la roue avant, que dans la zone supérieure.

8. Dispositif selon une des revendications 1-7,
caractérisé en ce que:
est prévue entre les organes de guidage (3,4) une rampe d'atttaque resp. surface d'attaque, resp. pas d'élévation montant selon la direction de marche, dont la hauteur et longueur resp. inclinaison sont dimensionées et dirigées contre les guidages de telle sorte que la partie arrière / inférieure du pareboue de la roue arrière est soulevée du sol resp. dispose d'espace libre par rapport a son environnment également dans la dernière phase de l'élévation.

9. Dispositif selon la revendication 8,
caractérisé en ce que:
la rampe d'attaque et une rampe de d gagement suivant celle-ci sont formées par une bascule (17) pivotant selon un axe horizontal au dessus du sol.
